# EUROPÄISCHE PATENTSCHRIFT

(11) **EP 4 038 291 B1**
(45) Veröffentlichungstag und Bekanntmachung des Hinweises auf die Patenterteilung: **09.04.2025**
(21) Anmeldenummer: 20785965.3
(22) Anmeldetag: 01.10.2020
(51) Int. Cl.: F16D 65/18, F16D 65/56

(54) **BREMSSTEMPEL EINER SCHEIBENBREMSE EINES NUTZFAHRZEUGS UND SCHEIBENBREMSE**
BRAKE PLUNGER OF A DISK BRAKE OF A UTILITY VEHICLE, AND DISK BRAKE
PISTON DE FREIN D'UN FREIN À DISQUE D'UN VÉHICULE UTILITAIRE ET FREIN À DISQUE

(30) Priorität: 02.10.2019 DE 102019126584
(43) Veröffentlichungstag der Anmeldung: 10.08.2022
(73) Patentinhaber: KNORR-BREMSE Systeme für Nutzfahrzeuge GmbH, 80809 München (DE)
(72) Erfinder: HIDRINGER, Michael, 94544 Hofkirchen (DE); WEBER, Ralf, 80997 München (DE)
(86) Internationale Anmeldenummer: PCT/EP2020/077524
(87) Internationale Veröffentlichungsnummer: WO 2021/064104

(56) Entgegenhaltungen:
- EP-A1- 1 627 159
- EP-A1- 2 690 304
- DE-A1- 102015 104 183
- US-A1- 2018 259 021

## Beschreibung

Die vorliegende Erfindung betrifft einen Bremsstempel einer Scheibenbremse eines Nutzfahrzeugs gemäß dem Oberbegriff des Anspruchs 1 sowie eine Scheibenbremse.

Gattungsgemäße pneumatisch oder elektromotorisch betätigbare Scheibenbremse von Nutzfahrzeugen sowie darin eingesetzte Bremsstempel sind beispielsweise aus der DE 10 2012 009 901 A1 oder der EP 1 627 159 B1 bekannt.

Bei diesen Scheibenbremsen erfolgt die Kraftübertrag in der Scheibenbremse über einen Bremsstempel mit einer Stellspindel und einem Druckstück zum Belag hin. Mit dem Gewinde auf dem Gewinderohr der Stellspindel wird der Verschleiß der Beläge und der Bremsscheibe ausgeglichen. Die Scheibenbremsen sind üblicherweise mit einer Nachstelleinrichtung ausgerüstet, die auf mindestens eine Stellspindel wirkt und das durch Verschleiß von Bremsbelägen und Bremsscheibe wachsende Lüftspiel konstant hält.

Die Schnittstelle zwischen dem Gewinderohr der Stellspindel und dem Bremsbelag muss einen rotatorischen Freiheitsgrad aufweisen. Dies ist darin begründet, dass das Gewinderohr aufgrund der Höhe der zur Verfügung stehenden Belag-Verschleißmasse einen großen Verfahrweg unterliegt. Der Innenraum des Bremssattels muss daher mit einem sehr flexiblen Dichtelement gegenüber der Gewindestange abgedichtet werden. Dieses ist zumeist aus Silikonkautschuk.

Die gewinderohrseitige Dichtstelle muss also gegenüber der Dichtstelle am Bremssattel drehbar sein, da ansonsten der Verschleißweg des Gewinderohrs (in der Regel > 50 mm, bei einem Vorschub von ca. 2 - 8 mm pro voller Umdrehung der Gewindestange) das Dichtelement zerstören würde.

Dies wird üblicherweise durch ein Druckstück gelöst, das mit dem Dichtelement, insbesondere einem Faltenbalg starr verbunden ist, jedoch zum Gewinderohr drehbar gelagert ist. An der Bremssattelseite ist das Dichtelement starr gelagert. Da das Dichtelement extrem elastisch sein muss, sind die zur Verfügung stehenden Materialen zumeist kritisch hinsichtlich ihrer Einsatztemperatur. Da an der beschriebenen Schnittstelle zumeist Temperaturen auftreten, die das Material des Dichtelements (z.B.: Silikonkautschuk) stark und unter Umständen zu stark belasten, handelt es sich bei Dichtelement (meist gemeinsam mit dem Druckstück) um ein Verschleißteil, dass während der Betriebsdauer der Scheibenbremse ausgetauscht werden muss.

Der Tausch dieser Komponenten im Feld ist meist beschwerlich, da das Dichtelement und das Druckstück bei eingebauter Scheibenbremse nur schwer zugänglich sind.

Die axiale Sicherung des Druckstücks erfolgt durch eine stirnseitige Verstemmung am Zapfen des Gewinderohrs oder durch einen Absatz in diesem Bereich.

Aufgabe der vorliegenden Erfindung ist es, einen Bremsstempel einer Scheibenbremse eines Nutzfahrzeugs sowie eine Scheibenbremse bereitzustellen, die einen einfacheren Austausch des Druckstücks ermöglicht, insbesondere ohne den Einsatz von Sonderwerkzeugen.

Diese Aufgabe wird durch einen Bremsstempel mit den Merkmalen der Ansprüche 1 und 12 sowie durch eine Scheibenbremse eines Nutzfahrzeugs mit den Merkmalen des Anspruchs 15 gelöst.

Der erfindungsgemäße Bremsstempel einer Scheibenbremse eines Nutzfahrzeugs weist eine Stellspindel mit einem Gewinderohr und einem aus einer Stirnfläche des Gewinderohres vorstehenden Stellspindelkopf auf. Der Bremsstempel weist des Weiteren ein auf den Stellspindelkopf axial zu einer Längsachse der Stellspindel gesichert aufgesetztes Druckstück mit einer Aufnahmeöffnung zur Aufnahme des Stellspindelkopfes auf.

Zwischen dem Druckstück und dem Stellspindelkopf ist eine Gleithülse angeordnet, wobei die Gleithülse oder das Druckstück axial in einer Nut der Stellspindel gesichert ist.

Der Stellspindelkopf weist nahe der Stirnfläche des Gewinderohres eine Nut auf, in der zumindest Teilbereiche eines Randes der Gleithülse aufgenommen sind.

Mit einem solchermaßen ausgebildeten Bremsstempel ist in einfacher Weise eine Montage und Demontage des Druckstücks an bzw. von der Stellspindel ermöglicht.

Die Montage und Demontage des Druckstücks und der Stellspindel ist dabei von Hand ohne Werkzeuge ermöglicht. Dadurch ergibt sich der Vorteil, dass keine Gefahr von Beschädigung von Bauteilen der Scheibenbremse im Service durch Anwendung von Werkzeugen droht. Insbesondere besteht dadurch keine Beschädigungsgefahr für das Gewinde des Gewinderohrs der Stellspindel.

Durch die Anordnung dieser Nut nahe der Stirnfläche des Gewinderohres ist es ermöglicht, den bisher notwendigen Verstemmbereich der Stellspindel wegfallen zu lassen, wodurch die Gesamtbaulänge der Gewinderohreinheit verkürzt wird und damit insbesondere auch die gesamte Länge der Scheibenbremse.

Vorteilhafte Ausführungsvarianten der Erfindung sind Gegenstand der Unteransprüche.

Gemäß einer vorteilhaften Ausführungsvariante ist der Rand der Gleithülse in der Nut verstemmt, was eine einfache und zuverlässige axiale Fixierung des Druckstücks relativ zur Stellspindel ermöglicht.

Die Gleithülse kann dabei in der Aufnahmeöffnung des Druckstücks eingepresst sein.

Gemäß einer weiteren vorteilhaften Ausführungsvariante weist der Rand der Gleithülse mehrere in die Nut vorstehende Federarme auf.

Dadurch ist eine Verbindung nach Art einer Schnappsicherung zwischen Gleithülse und Stellspindel geschaffen, die eine einfache Montage und Demontage ermöglicht.

Um eine besonders einfache Montage und Demontage zu ermöglichen, ist die Nut als Gewindenut mit in axialer Richtung variierender Tiefe ausgebildet.

Dies ermöglicht insbesondere, die Federarme bei der Demontage durch Drehen der Gleithülse aus der Gewindenut heraus zu lösen.

Zur weiteren Sicherung der Gleithülse auf dem Stellspindelkopf ist in der Nut gemäß einer weiteren bevorzugten Ausführungsvariante ein Sicherungsring aufgenommen.

Dieser Sicherungsring ist dabei gemäß einer vorteilhaften Ausführungsvariante als Ring mit kreisförmigem Querschnitt, insbesondere als O-Ring oder auch als Keilring ausgebildet.

Gemäß einer weiteren bevorzugten Ausführungsvariante weist die Aufnahmeöffnung des Druckstücks wenigstens eine Ausnehmung auf. Diese Ausnehmung ist dabei nach einer Ausführungsvariante als Aufnahmenut ausgebildet.

Gemäß einer weiteren Ausführungsvariante ist die Ausnehmung als Übergangsfase zwischen der Aufnahmeöffnung und einer der Stirnfläche des Gewinderohres zugewandten Anlagefläche des Druckstücks ausgebildet, was insbesondere die Aufnahme eines als Keilring ausgebildeten Sicherungsrings in einfacher Weise ermöglicht.

Gemäß einer weiteren bevorzugten Ausführungsvariante sind an einer Mantelaußenfläche der Gleithülse mehrere in eine Aufnahmenut in der Aufnahmeöffnung des Druckstücks vorstehende Haltenasen angeordnet, insbesondere angeformt. Dies ermöglicht eine vereinfachte Montage der Gleithülse in dem Druckstück.

Die Gleithülse ist zur leichteren Montage als radial zusammendrückbare Schlitzhülse ausgebildet.

Nach einer nochmals weiteren Ausführungsvariante ist das Druckstück einen gewindelosen Bereich des Gewinderohres übergreifend, in einer Nut am Außenumfang des Gewinderohres nahe der Stirnfläche des Gewinderohres axial gesichert.

Auch mit dieser Variante ist eine zuverlässige axiale Sicherung des Druckstücks zur Stellspindel ermöglicht.

Nach einer vorteilhaften Weiterbildung sind zumindest Teilbereiche des den gewindelosen Bereich des Gewinderohres übergreifenden Bereichs des Druckstücks in der Nut verstemmt.

Nach einer alternativen Ausführungsvariante ist an einem dem Stellspindelkopf nahen Ende der Stellspindel ein Werkzeugabsatz angeformt, an dem ein Servicewerkzeug ansetzbar ist.

Durch den Werkzeugansatz kann vorteilhaft eine Beschädigung des Außengewindes der Stellspindel vermieden werden.

Die erfindungsgemäße Scheibenbremse zeichnet sich durch wenigstens einen wie oben beschriebenen Bremsstempel aus.

Nachfolgend werden Ausführungsbeispiele der Erfindung anhand der beiliegenden Zeichnungen näher erläutert. Es zeigen:
- Figur 1: eine Draufsicht auf eine gattungsgemäße Scheibenbremse mit Darstellung eines Bremssattels, einer Scheibenbremse und beidseitig der Scheibenbremse angeordneten Bremsbelägen sowie Bremsstempel mit Gewindespindeln und Druckstücken, die an einem der Bremsbeläge anliegend angeordnet sind,
- Fig. 2: eine Schnittdarstellung einer Ausführungsvariante eines erfindungsgemäßen Bremsstempels mit am Druckstück angeordnetem Faltenbalg,
- Fig. 3: eine Ausschnittsvergrößerung des in Fig. 2 mit III dargestellten Bereichs,
- Fig. 4: eine der Fig. 2 entsprechende Darstellung des Bremsstempels in einer anderen Schnittebene,
- Fig. 5: eine Detailansicht des in Fig. 4 mit V bezeichneten Ausschnitts
- Fig. 6 und 7: den Fig. 2 und 4 entsprechende Schnittdarstellungen einer weiteren Ausführungsvariante eines erfindungsgemäßen Bremsstempels,
- Fig. 8: ein Detaildarstellung des in Fig. 7 mit VIII bezeichneten Ausschnitts,
- Fig. 9: eine Seitenansicht auf eine Ausführungsvariante einer Stellspindel mit als Gewindenut ausgebildeter Nut zur axialen Sicherung der Gleithülse,
- Fig. 10 u. 11: Schnittansichten unterschiedlicher Ausführungsvarianten eines Druckstücks,
- Fig. 12a, 12b: unterschiedliche Ansichten eines Sicherungsrings zum Einsatz in der Nut am unteren Rand des Stellspindelkopfes,
- Fig. 13 u. 14: unterschiedliche Ansichten einer Ausführungsvariante einer Gleithülse des Bremsstempels mit Federarmen und Nasen,
- Fig. 15: eine der Fig. 2 entsprechende weitere Schnittansicht einer Ausführungsvariante eines erfindungsgemäßen Bremsstempels mit auf den Stellspindelkopf aufgesetzter, in einer Nut der Stellspindel gesicherter Gleithülse,
- Fig. 16: eine perspektivische Darstellung der in Fig. 15 dargestellten Stellspindel ohne Druckstück, jedoch mit aufgesetzter Gleithülse,
- Fig. 17: eine Detaildarstellung der in Fig. 16 gezeigten Stellspindel mit Darstellung der Nut,
- Fig. 18: eine perspektivische Darstellung der Stellspindel gemäß Fig. 15 mit aufgesetzter Gleithülse vor Montage des Druckstücks mit daran angebrachtem Faltenbalg,
- Fig. 19: eine weitere perspektivische Darstellung der Stellspindel, der Gleithülse und des Druckstücks zur Erläuterung der Montage,
- Fig. 20: eine weitere der Fig. 2 entsprechende Schnittdarstellung einer Ausführungsvariante eines erfindungsgemäßen Bremsstempels mit an einem Außenumfang des Gewinderohres axial gesichertem Druckstück,
- Fig. 21: eine Vergrößerungsansicht des Anbindungsbereiches des Druckstücks an die Stellspindel gemäß Fig. 20,
- Fig. 22 u. 23: den Fig. 20 und 21 entsprechende Darstellungen im verstemmten Zustand des Druckstücks,
- Fig. 24: eine der Fig. 20 entsprechende Darstellung einer weiteren Ausführungsvariante eine erfindungsgemäßen Bremsstempels mit in der als Übergangsfase ausgebildeten Ausnehmung des Druckstücks aufgenommenen als Keilring ausgebildeten Sicherungsring,
- Fig. 25: eine der Fig. 20 entsprechende Darstellung einer weiteren Ausführungsvariante eine erfindungsgemäßen Bremsstempels mit einem Werkzeugansatz, und
- Fig. 26: eine schematische Seitenansicht des Bremsstempels gemäß Fig. 25 mit am Werkzeugansatz angesetzten Werkzeug.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Bremsstempels, der Stellspindel, des Druckstücks, der Gleithülse und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

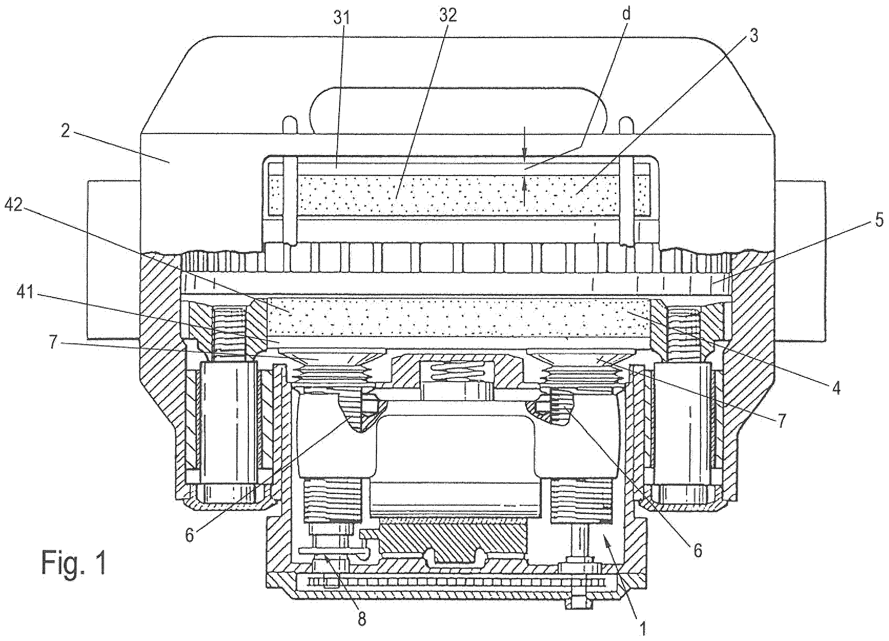

In der **Figur 1** ist mit dem Bezugszeichen 2 ein Bremssattel einer pneumatisch oder elektromotorisch betätigbaren Scheibenbremse eines Nutzfahrzeuges bezeichnet. Der Bremssattel 2 übergreift eine Bremsscheibe 5. Beidseitig der Bremsscheibe 5 sind jeweilige Bremsbeläge 3, 4 mit jeweiligen Belagträgerplatten 31, 41 und daran festgelegten Reibbelägen 32, 42 angeordnet. Eine Zuspannvorrichtung mit wenigstens einem, hier zwei Bremsstempeln 1 mit jeweils einer Stellspindel 6, die ein jeweiliges Druckstück 7 trägt, drückt bei Auslösung eines Bremsvorganges den zuspannseitigen Bremsbelag 4 gegen die Bremsscheibe 5, während der reaktionsseitige Bremsbelag durch Verschieben des Bremssattels 2 gegen die Bremsscheibe 5 gedrückt wird. Die Bremsstempel 1 sind des Weiteren über eine mit der Stellspindel 6 in Wirkverbindung stehende Nachstelleinrichtung 8 zur verschleißbedingten Nachstellung eines Lüftspiels verbunden.

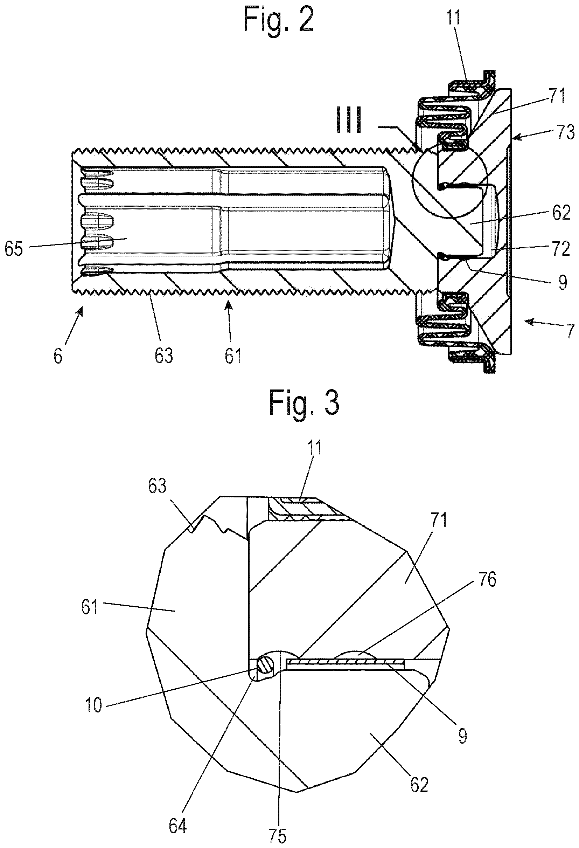

In den **Fig. 2 bis 5** ist eine erste Ausführungsvariante eines erfindungsgemäßen Bremsstempels 1 dargestellt. Der Bremsstempel 1 weist eine Stellspindel 6 mit einem Gewinderohr 61 und einem aus einer Stirnfläche 66 des Gewinderohres 61 vorstehenden Stellspindelkopf 62 auf. Das Gewinderohr 61 ist dabei mit Außengewinde 63 und einer Ausnehmung 65 zur Aufnahme eines nicht dargestellten Antriebszapfens versehen. Der Stellspindelkopf 62 erstreckt sich koaxial zur Drehachse des Gewinderohrs 61 und weist einen gegenüber dem Gewinderohr 61 reduzierten Radius auf.

Axial zu der Längsachse der Stellspindel 6 ist auf den Stellspindelkopf 62 ein Druckstück 7 aufgesetzt. Das Druckstück 7 ist als einstückiger Druckkörper 71 ausgebildet, mit einer in Funktion gegen eine Belagträgerplatte drückenden Druckfläche 73 und einer gegenüberliegenden Anlagefläche 74, die auf einer Stirnfläche 66 des Gewinderohrs 61 aufliegt. In der Anlagefläche 74 ist zentral eine Aufnahmeöffnung 72 vorgesehen, die der Aufnahme des Stellspindelkopfes 62 dient.

Zur Drehentkopplung zwischen dem Druckstück 7 und der Stellspindel 6 ist zwischen dem Druckstück 7 und dem Stellspindelkopf 62 eine Gleithülse 9 angeordnet, die im hier gezeigten Ausführungsbeispiel in die Aufnahmeöffnung 72 des Druckstücks 7 eingepresst ist. Ein der Stirnfläche 66 nahes Ende der Gleithülse 9 ist in einer Nut 64 aufgenommen, die an dem Stellspindelkopf 62 nahe der Stirnfläche 66 des Gewinderohrs 61 ausgebildet ist.

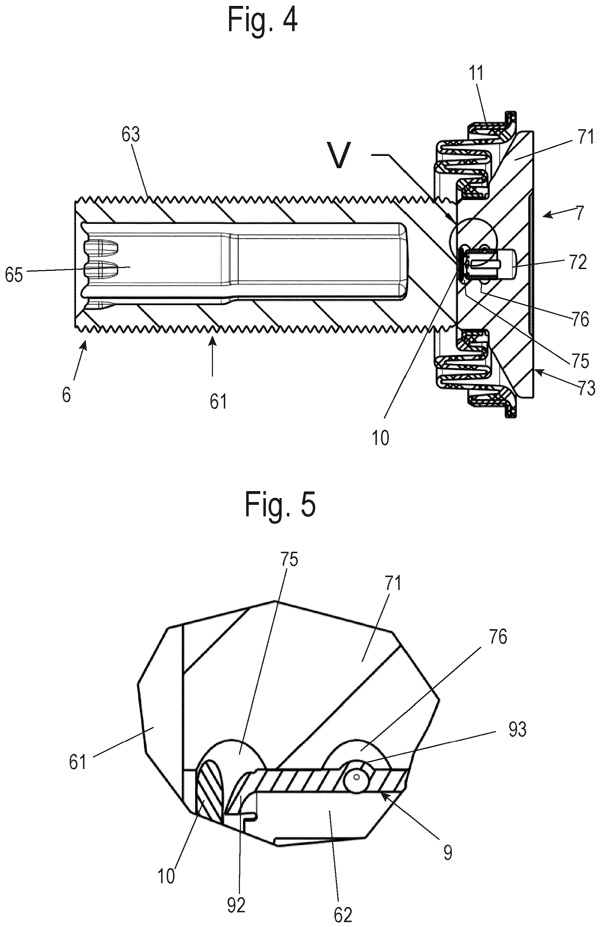

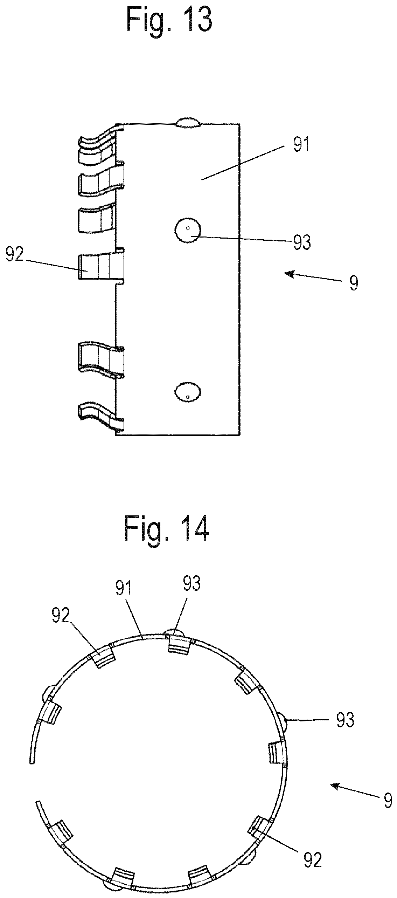

Wie in den Fig. 4, 5 und der Einzeldarstellung einer bevorzugten Ausführungsvariante der Gleithülse 9 darstellenden **Figuren 13 und 14** gezeigt ist, sind am Rand der Gleithülse 9 mehrere in die Nut 64 vorstehende Federarme 92 angeformt. Die Gleithülse 9 ist bevorzugt aus einem Federstahl gefertigt. Dies ermöglicht beim Aufstülpen der Gleithülse 9 auf den Stellspindelkopf 62 ein Vorspringen der Federarme 92 in die Nut 64 zur axialen Sicherung der Gleithülse 9 an der Stellspindel 6.

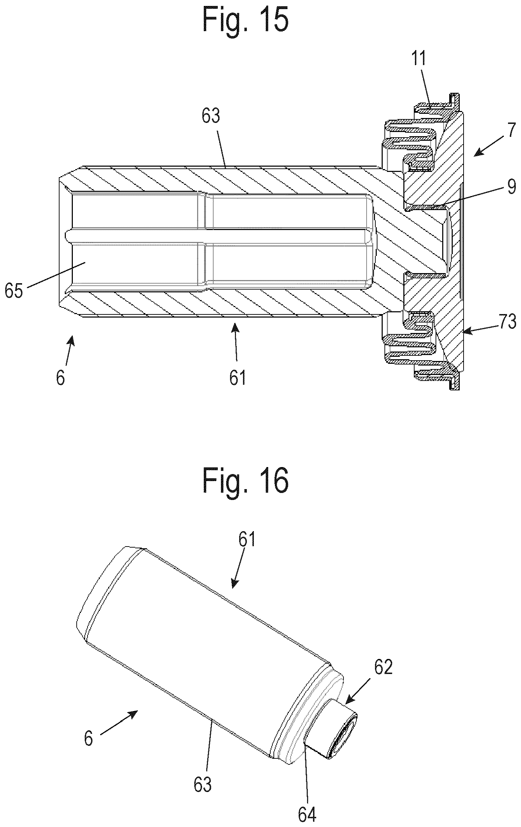

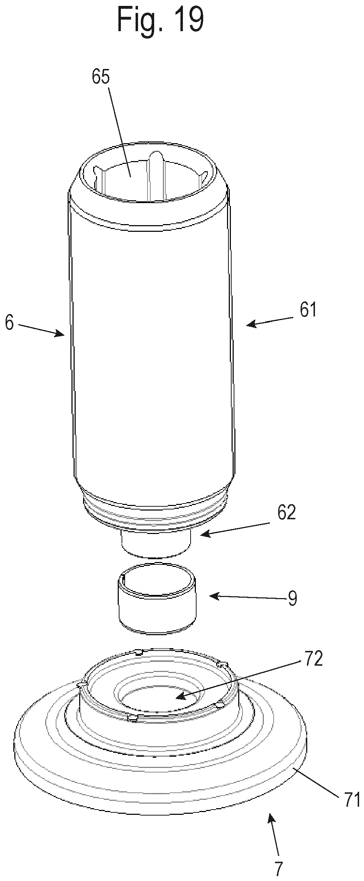

Denkbar ist auch, wie in einem in den Fig. **15-19** gezeigten Ausführungsbeispiel dargestellt ist, den Rand der Gleithülse 9 in der Nut 64 zu verstemmen.

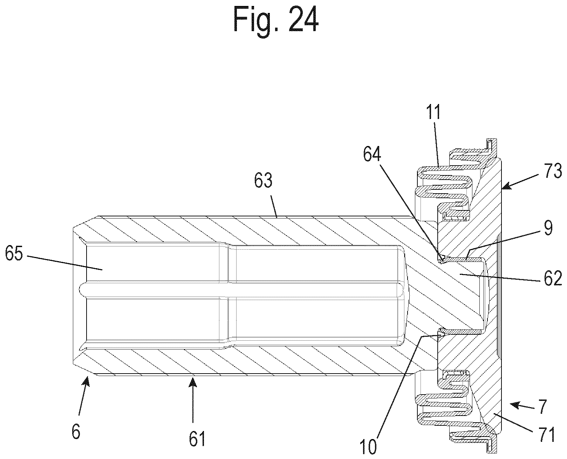

Auch das in **Fig. 24** gezeigte Ausführungsbeispiel des Bremsstempels 1 zeigt eine solchermaßen verstemmte Gleithülse 9.

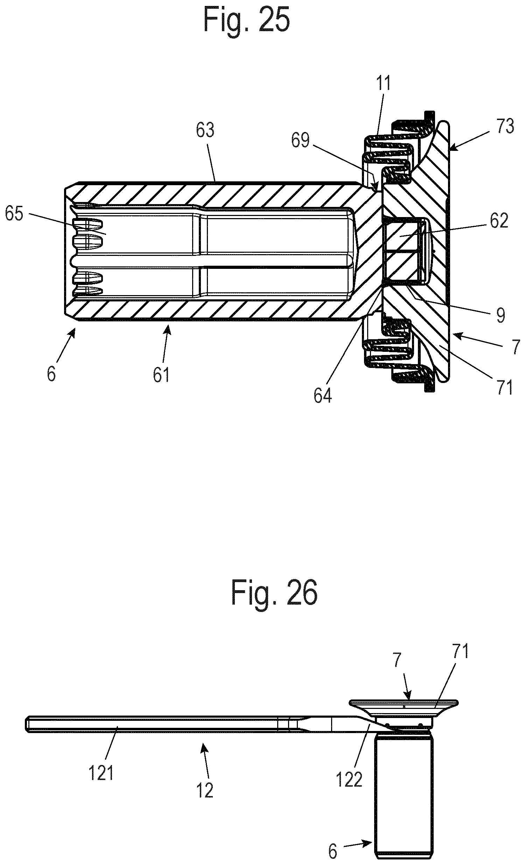

Weiter ist in einer in den **Figuren 25 und 26** gezeigten Ausführungsvariante des Bremsstempels 1 an einem dem Stellspindelkopf 62 nahen Ende der Stellspindel 6 ein Werkzeugabsatz 69 angeformt, an dem ein in Figur 26 dargestelltes Servicewerkzeug 12, vorzugsweise in Gestalt eines Gabelwerkzeugs, ansetzbar ist. Durch den Werkzeugabsatz 69 kann vorteilhaft eine Beschädigung des Außengewindes 63 der Stellspindel 6 vermieden werden.

Das Servicewerkzeug 12 besteht dabei, wie in Figur 26 dargestellt, vorzugsweise im Wesentlichen aus einem Griffstück 121, von dem sich zwei Gabeln 122 erstrecken, die zur leichten Einfädelung am Werkzeugabsatz 69 zu ihren freien Enden hin sich konisch verjüngend ausgebildet sind.

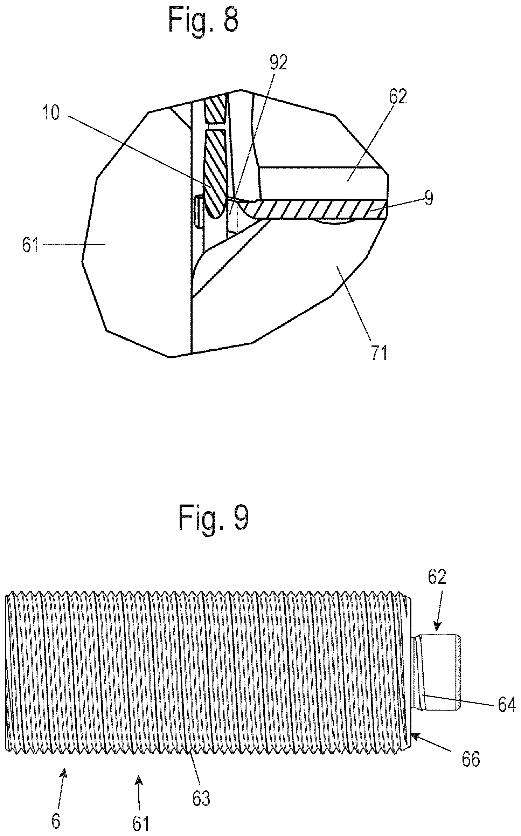

Anstelle einer ringförmigen Nut 64, die im Stellspindelkopf 62 nahe der Stirnfläche 66 des Gewinderohres 61 ausgebildet ist, ist es auch denkbar, wie in **Fig. 9** dargestellt, die Nut 64 als Gewindenut mit in axialer Richtung variierender Tiefe auszubilden.

Bei dieser Ausführungsvariante ist zur zusätzlichen Sicherung ein als Keilring ausgebildeter Sicherungsring 10 in der durch die Nut 64 und eine als Übergangsfase der Aufnahmeöffnung 72 und einer der Stirnfläche 66 des Gewinderohres 61 zugewandten Anlagefläche 74 des Druckstücks 7 ausgebildete Ausnehmung 75 gebildeten Hohlraum eingelegt.

Bei den in den Fig. 2-5 dargestellten Ausführungsvarianten ist ebenfalls ein solcher Sicherungsring 10 vorgesehen, der hier mit einem kreisförmigen Querschnitt ausgebildet ist.

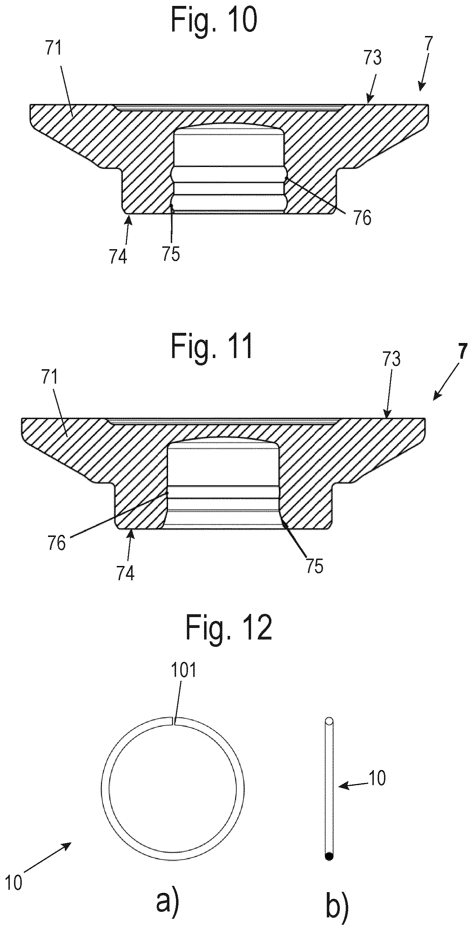

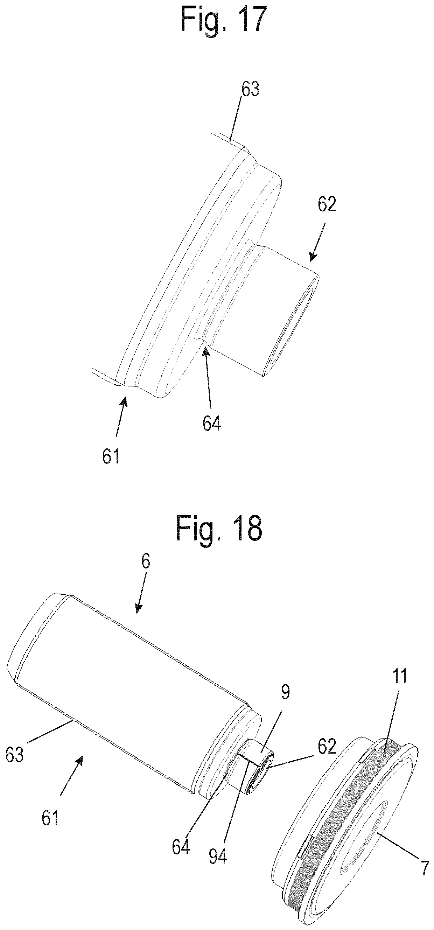

Der Sicherungsring 10 und/oder die Gleithülse 9 sind zur leichteren Montage bevorzugt als O-Ring bzw. Schlitzhülse ausgebildet, wie es beispielhaft in den **Fig. 12a** **und** **18** dargestellt ist. Der Sicherungsring 10 verhindert dabei das Abziehen der Gleithülse 9 von dem Stellspindelkopf 62 mittels rein axialen Verschiebekräften.

Hierzu ist es notwendig, dass der Sicherungsring 10 eine Gegenkontur im Druckstück 7 findet, die im montierten Zustand einen Klemmkeil zwischen Druckstück 7, Federarmen 92 der Gleithülse 9 und Nut 64 am Stellspindelkopf 62 bildet.

Beim Aufdrücken der Gleithülse 9 werden die Federarme 92 der Gleithülse 9, auf denen bereits der Sicherungsring 10 sitzt und die bereits im Druckstück 7 vormontiert ist, über eine Fase am Stellspindelkopf 62 aufgespreizt. Dabei schieben diese den Sicherungsring 10 in die am Druckstück 7 vorgesehene, in den Figuren 5, **10 und 11** gezeigte Ausnehmung 75. Der Außendurchmesser der Gegenkontur am Stellspindelkopf 62 und der Innendurchmesser der Gleithülse 9 (im montierten Zustand im Druckstück 7) müssen dabei so aufeinander abgestimmt sein, dass der verbleibende Spalt kleiner ist als die Überdeckung, die durch die Haltenase 93 der Gleithülse 9 und die Hinterschneidung im Druckstück 7 vorhanden ist. Hierzu ist es vorteilhaft, den Außendurchmesser am Stellspindelkopf 62 zum Ende hin leicht konisch auszuführen, um diesen Effekt zu unterstützen.

Bei der Demontage, die bei diesem Ausführungsbeispiel eine kombinierte axiale Verschiebekraft mit Drehbewegung erfordert, wird durch die Steigung der als Gewindenut ausgebildeten Nut 64, in die sich die Federarme 92 der Gleithülse 9 einfädeln, eine Verschränkung des Sicherungsrings 10 in axialer Richtung erzeugt, die dafür sorgt, dass auch in diesem Fall der Sicherungsring 10 in die Ausnehmung 75 am Druckstück 7 gedrückt wird und somit den Querschnitt für die Demontage frei gibt.

Auf diese Weise gelingt es, die Bedingung einer Absicherung gegen rein axiale Abzugskräfte von bevorzugt mindestens 500 N zu erfüllen, sowie die Möglichkeit zu schaffen, Montage und Demontage rein manuell, ohne Zuhilfenahme von Werkzeugen, auszuführen.

Wie des Weiteren den Fig. 2-5, 13 und 14 zu entnehmen ist, sind an einer Mantelaußenfläche 91 der Gleithülse 9 mehrere in eine Aufnahmenut 76 in der Aufnahmeöffnung 72 des Druckstücks 7 vorstehende Haltenasen 93 angeordnet, insbesondere angeformt.

Durch diese Haltenasen 93, die in einer entsprechend geformten, in den Figuren 10 und 11 gezeigten Aufnahmenut 76 in der Aufnahmeöffnung 72 des Druckstücks 7 einliegen, ist eine weitere axiale Sicherung der Gleithülse 9 in dem Druckstück 7 gewährleistet. Dadurch ist ein Einpressen der Gleithülse 9 in das Druckstück 7 nicht notwendig.

Ist die Gleithülse 9, wie in Fig. 14 dargestellt, als Schlitzhülse ausgebildet, wird die Gleithülse 9 bevorzugt mit einem größeren Außendurchmesser gefertigt als der Innendurchmesser der Aufnahmeöffnung 72 des Druckstücks 7. Durch die geschlitzte Ausführung der Gleithülse 9 lässt sich die Gleithülse 9 bei der Montage in der Aufnahmeöffnung 72 des Druckstücks 7 in einfacher Weise zusammendrücken und in die Aufnahmeöffnung 72 einschieben. Sobald die Gleithülse 9 ihre Endposition erreicht hat, spreizt sie sich durch die Ausbildung aus Federstahl so auseinander, dass die Haltenasen 93 in die Aufnahmenut 76 des Druckstücks 7 vorstehen.

Ein großer Vorteil einer solchen schlitzförmigen Gleithülse 9 besteht auch darin, dass der Außendurchmesser der Gleithülse 9 mit einer großen Plustoleranz versehen werden kann.

Die Ausnehmung 76 in der Aufnahmeöffnung 72 des Druckstücks 7 ist hier als Aufnahmenut ausgebildet.

Wie in den Fig. 3 und 5 gut zu erkennen ist, ist im Bereich der Nut 64 des Stellspindelkopfes 62 auf gleicher Höhe eine weitere als Nut ausgebildete Ausnehmung in der Aufnahmeöffnung 72 des Druckstücks 7 angeformt, die der Aufname des Sicherungsrings 10 dient.

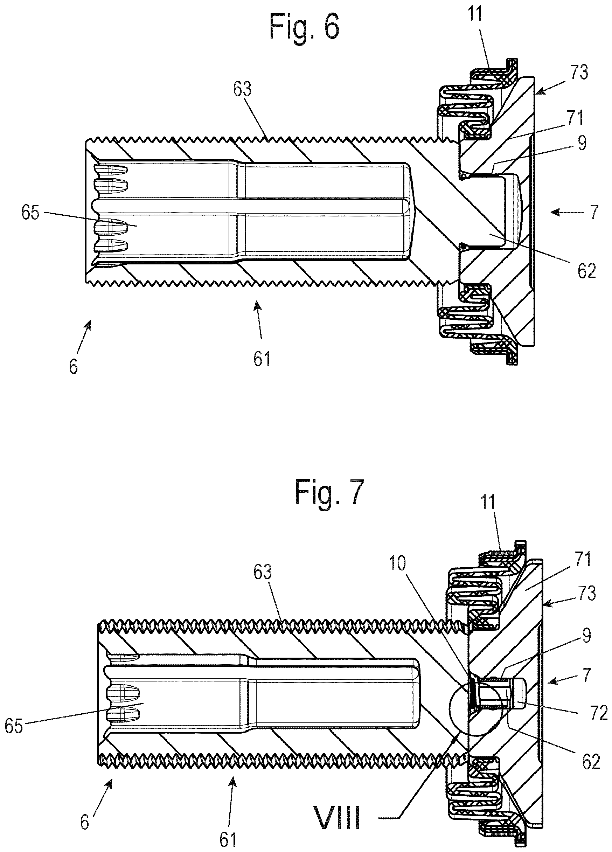

Bei der in den **Fig. 6-8** gezeigten alternativen Ausführungsvariante ist die Ausnehmung 75 als Übergangsfase zwischen der Aufnahmeöffnung 72 und der der Stirnfläche 66 des Gewinderohres 61 zugewandten Anlagefläche 74 des Druckstücks 7 ausgebildet.

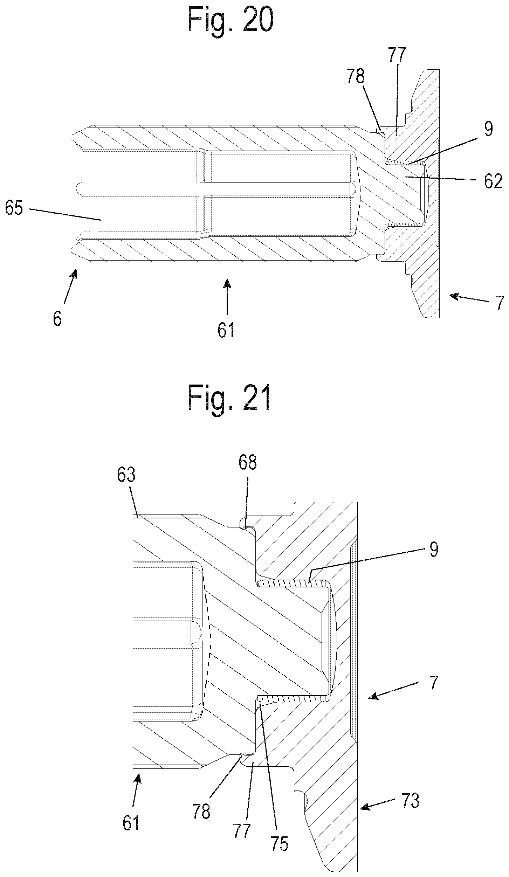

Eine nochmals weitere Ausführungsvariante eines erfindungsgemäßen Bremsstempels 1 ist in den **Fig. 20-23** dargestellt.

Bei dieser Ausführungsvariante ist das Druckstück 7 axial in einer Nut 68 an der Mantelaußenfläche des Gewinderohres 61 gesichert.

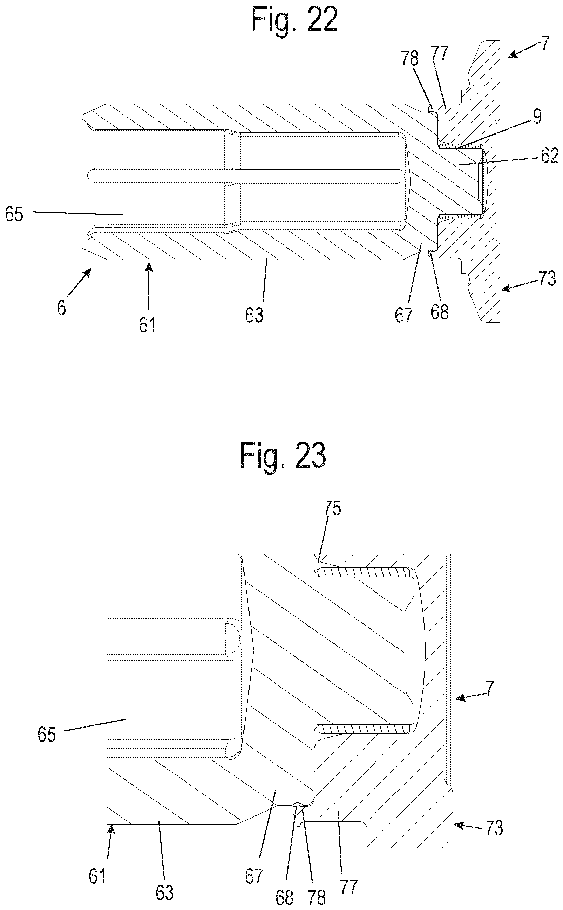

Wie in den Fig. 20 und 21 dargestellt ist, weist das Gewinderohr 61 nahe dem Stellspindelkopf 62 einen gewindelosen Bereich 67 auf, in dem eine Nut 68 eingebracht ist. In diese Nut 68 wird bei der Montage des Druckstücks 7 auf den Stellspindelkopf 62 ein Rand 78 eines ringförmigen Bereiches 77 des Druckstücks 7, der einen gewindelosen Bereich 67 des Gewinderohres 61 übergreift, auf die Stellspindel 6 aufgesetzt und anschließend, wie in den Fig. 22 und 23 dargestellt ist, verstemmt, so dass der verstemmte Rand 78 in die Nut 68 vorsteht.

### Bezugszeichenliste

- 1: Bremsstempel
- 2: Bremssattel

- 3: Bremsbelag
- 31: Belagträgerplatte
- 32: Reibbelag

- 4: Bremsbelag
- 41: Belagträgerplatte
- 42: Reibbelag

- 5: Bremsscheibe

- 6: Stellspindel
- 61: Gewinderohr
- 62: Stellspindelkopf
- 63: Außengewinde
- 64: Nut
- 65: Ausnehmung
- 66: Stirnfläche
- 67: gewindeloser Bereich
- 68: Nut
- 69: Werkzeugabsatz

- 7: Druckstück
- 71: Druckkörper
- 72: Aufnahmeöffnung
- 73: Druckfläche
- 74: Anlagefläche
- 75: Ausnehmung
- 76: Ausnehmung
- 77: ringförmiger Bereich
- 78: Rand

- 8: Nachstelleinrichtung
- 9: Gleithülse
- 91: Mantelaußenfläche
- 92: Federarm
- 93: Haltenase
- 94: Schlitz

- 10: Sicherungsring
- 101: Schlitz

- 11: Faltenbalg
- 12: Servicewerkzeug
- 121: Griffstück
- 122: Gabel

- d: Dicke der Belagträgerplatte

## Patentansprüche

1. Bremsstempel (1) einer Scheibenbremse eines Nutzfahrzeugs, aufweisend
- eine Stellspindel (6) mit einem Gewinderohr (61) und einem aus einer Stirnfläche (66) des Gewinderohres (61) vorstehenden Stellspindelkopf (62),
- ein auf den Stellspindelkopf (62) axial zu einer Längsachse der Stellspindel (6) gesichert aufgesetztes Druckstück (7) mit einer Aufnahmeöffnung (72) zur Aufnahme des Stellspindelkopfes (62),
- wobei zwischen dem Druckstück (7) und dem Stellspindelkopf (62) eine Gleithülse (9) angeordnet ist,
- wobei die Gleithülse (9) axial in einer Nut (64) der Stellspindel (6) gesichert ist,
**dadurch gekennzeichnet, dass**
- der Stellspindelkopf (62) nahe der Stirnfläche (66) des Gewinderohres (61) die Nut (64) aufweist, in der zumindest Teilbereiche eines Randes der Gleithülse (9) aufgenommen sind.

2. Bremsstempel (1) nach Anspruch 1, **dadurch gekennzeichnet, dass** der Rand der Gleithülse (9) in der Nut (64) verstemmt ist.

3. Bremsstempel (1) nach Anspruch 1, **dadurch gekennzeichnet, dass** der Rand der Gleithülse (9) mehrere in die Nut (64) vorstehende Federarme (92) aufweist.

4. Bremsstempel (1) nach einem der Ansprüche 1 bis 3, **dadurch gekennzeichnet, dass** die Nut (64) als Gewindenut mit in axialer Richtung variierender Tiefe ausgebildet ist.

5. Bremsstempel (1) nach einem der vorstehenden Ansprüche, **dadurch gekennzeichnet, dass** in der Nut (64) ein Sicherungsring (10) aufgenommen ist.

6. Bremsstempel (1) nach Anspruch 5, **dadurch gekennzeichnet, dass** der Sicherungsring (10) als O-Ring oder als Keilring ausgebildet ist.

7. Bremsstempel (1) nach einem der vorstehenden Ansprüche, **dadurch gekennzeichnet, dass** die Aufnahmeöffnung (72) des Druckstücks (7) wenigstens eine Ausnehmung (75, 76) aufweist.

8. Bremsstempel (1) nach Anspruch 7, **dadurch gekennzeichnet, dass** die Ausnehmung (75, 76) als Aufnahmenut ausgebildet ist.

9. Bremsstempel (1) nach Anspruch 7, **dadurch gekennzeichnet, dass** die Ausnehmung (75) als Übergangsfase zwischen der Aufnahmeöffnung (72) und einer der Stirnfläche (66) des Gewinderohres (61) zugewandten Anlagefläche (74) des Druckstücks (7) ausgebildet ist.

10. Bremsstempel (1) nach einem der vorstehenden Ansprüche, **dadurch gekennzeichnet, dass** an einer Mantelaußenfläche (91) der Gleithülse (9) mehrere in eine Aufnahmenut (76) in der Aufnahmeöffnung (72) des Druckstücks (7) vorstehende Haltenasen (93) angeordnet, insbesondere angeformt sind.

11. Bremsstempel (1) nach einem der vorstehenden Ansprüche, **dadurch gekennzeichnet, dass** die Gleithülse (9) als radial zusammendrückbare Schlitzhülse ausgebildet ist.

12. Bremsstempel (1) einer Scheibenbremse eines Nutzfahrzeugs, aufweisend
- eine Stellspindel (6) mit einem Gewinderohr (61) und einem aus einer Stirnfläche (66) des Gewinderohres (61) vorstehenden Stellspindelkopf (62),
- ein auf den Stellspindelkopf (62) axial zu einer Längsachse der Stellspindel (6) gesichert aufgesetztes Druckstück (7) mit einer Aufnahmeöffnung (72) zur Aufnahme des Stellspindelkopfes (62),
- wobei zwischen dem Druckstück (7) und dem Stellspindelkopf (62) eine Gleithülse (9) angeordnet ist,
- wobei das Druckstück (7) axial in einer Nut (68) der Stellspindel (6) gesichert ist,
, **dadurch gekennzeichnet, dass**
das Druckstück (7) einen gewindelosen Bereich (67) des Gewinderohres (61) übergreifend in einer Nut (68) am Außenumfang des Gewinderohres (61) nahe der Stirnfläche (66) des Gewinderohres (61) axial gesichert ist.

13. Bremsstempel (1) nach Anspruch 12, **dadurch gekennzeichnet, dass** zumindest Teilbereiche des den gewindelosen Bereich (67) des Gewinderohres (61) übergreifenden Bereichs (77) des Druckstücks (7) in der Nut (68) verstemmt sind.

14. Bremsstempel (1) nach einem der vorstehenden Ansprüche, **dadurch gekennzeichnet, dass** an einem dem Stellspindelkopf (62) nahen Ende der Stellspindel (6) ein Werkzeugabsatz (69) zum Ansetzen eines Servicewerkzeuges (12) angeformt ist.

15. Scheibenbremse eines Nutzfahrzeugs, aufweisend
- eine eine Bremsscheibe (5) übergreifenden Bremssattel (2),
- eine im Bremssattel (2) angeordnete Zuspanneinrichtung zum Andrücken von Bremsbelägen (3, 4) an die Bremsscheibe (5),
- mindestens einen Bremsstempel (1) mit einer Stellspindel (6), die ein Druckstück (7) trägt, mit welchem ein zuspannseitiger Bremsbelag (4) gegen die Bremsscheibe (5) drückbar ist,
- eine mit der Stellspindel (6) in Wirkverbindung stehende Nachstelleinrichtung (8) zur Nachstellung eines Lüftspiels,
**dadurch gekennzeichnet, dass** der Bremsstempel (1) gemäß einem der vorstehenden Ansprüche ausgebildet ist.

## Claims

1. Brake plunger (1) of a disc brake of a utility vehicle, having
- an actuating spindle (6) with a threaded tube (61) and an actuating spindle head (62) projecting from an end surface (66) of the threaded tube (61),
- a thrust piece (7) which is seated on the actuating spindle head (62) so as to be secured axially in relation to a longitudinal axis of the actuating spindle (6) and which has a receiving opening (72) for receiving the actuating spindle head (62),
- wherein a sliding sleeve (9) is arranged between the thrust piece (7) and the actuating spindle head (62),
- wherein the sliding sleeve (9) is secured axially in a groove (64) of the actuating spindle (6), **characterized in that**
- the actuating spindle head (62) has the groove (64) near the end surface (66) of the threaded tube (61), in which groove at least partial regions of an edge of the sliding sleeve (9) are received.

2. Brake plunger (1) according to claim 1, **characterized in that** the edge of the sliding sleeve (9) is caulked in the groove (64).

3. Brake plunger (1) according to claim 1, **characterized in that** the edge of the sliding sleeve (9) has multiple spring arms (92) projecting into the groove (64).

4. Brake plunger (1) according to any one of claims 1 to 3, **characterized in that** the groove (64) is designed as a threaded groove with a depth varying in the axial direction.

5. Brake plunger (1) according to any one of the preceding claims, **characterized in that** a retaining ring (10) is received in the groove (64).

6. Brake plunger (1) according to claim 5, **characterized in that** the retaining ring (10) is designed as an O-ring or as a wedge ring.

7. Brake plunger (1) according to any one of the preceding claims, **characterized in that** the receiving opening (72) of the thrust piece (7) has at least one recess (75, 76).

8. Brake plunger (1) according to claim 7, **characterized in that** the recess (75, 76) is designed as a receiving groove.

9. Brake plunger (1) according to claim 7, **characterized in that** the recess (75) is designed as a transition chamfer between the receiving opening (72) and a contact surface (74) of the thrust piece (7) facing the end surface (66) of the threaded tube (61).

10. Brake plunger (1) according to any one of the preceding claims, **characterized in that** multiple retaining lugs (93) projecting into a receiving groove (76) in the receiving opening (72) of the thrust piece (7) are arranged on, in particular moulded onto, an outer circumferential surface (91) of the sliding sleeve (9).

11. Brake plunger (1) according to any one of the preceding claims, **characterized in that** the sliding sleeve (9) is designed as a radially compressible slotted sleeve.

12. Brake plunger (1) of a disc brake of a utility vehicle, having
- an actuating spindle (6) with a threaded tube (61) and an actuating spindle head (62) projecting from an end surface (66) of the threaded tube (61),
- a thrust piece (7) which is seated on the actuating spindle head (62) so as to be secured axially in relation to a longitudinal axis of the actuating spindle (6) and which has a receiving opening (72) for receiving the actuating spindle head (62),
- wherein a sliding sleeve (9) is arranged between the thrust piece (7) and the actuating spindle head (62),
- wherein the thrust piece (7) is secured axially in a groove (68) of the actuating spindle (6),
**characterized in that**
the thrust piece (7) is secured axially in a groove (68) on the outer circumference of the threaded tube (61) near the end surface (66) of the threaded tube (61), spanning a threadless region (67) of the threaded tube (61).

13. Brake plunger (1) according to claim 12, **characterized in that** at least partial regions of the region (77) of the thrust piece (7) spanning the threadless region (67) of the threaded tube (61) are caulked in the groove (68).

14. Brake plunger (1) according to any one of the preceding claims, **characterized in that** a tool shoulder (69) for positioning a service tool (12) is moulded onto an end of the actuating spindle (6) near the actuating spindle head (62).

15. Disc brake of a utility vehicle, having
- a brake caliper (2) spanning a brake disc (5),
- a clamping device arranged in the brake caliper (2) for pressing brake pads (3, 4) against the brake disc (5),
- at least one brake plunger (1) with an actuating spindle (6) which supports a thrust piece (7) with which a clamping-side brake pad (4) can be pressed against the brake disc (5),
- an adjustment device (8) in operative connection with the actuating spindle (6) for adjusting a clearance,
**characterized in that** the brake plunger (1) is designed according to any one of the preceding claims.

## Revendications

1. Tampon de frein (1) d'un frein à disque d'un véhicule utilitaire, présentant
- une broche de réglage (6) avec un tube fileté (61) et une tête de broche de réglage (62) faisant saillie d'une surface avant (66) du tube fileté (61),
- une pièce de pression (7) placée sur la tête de la broche de réglage (62), bloquée axialement par rapport à un axe longitudinal de la broche de réglage (6), avec une ouverture de logement (72) pour loger la tête de la broche de réglage (62),
- dans lequel un manchon coulissant (9) est disposé entre la pièce de pression (7) et la tête de broche de réglage (62),
- dans lequel le manchon coulissant (9) est bloqué axialement dans une rainure (64) de la broche de réglage (6), **caractérisé en ce que**
- la tête de la broche de réglage (62) présente, près de la surface avant (66) du tube fileté (61), la rainure (64) dans laquelle au moins des zones partielles d'un bord du manchon coulissant (9) sont logées.

2. Tampon de frein (1) selon la revendication 1, **caractérisé en ce que** le bord du manchon coulissant (9) est mati dans la rainure (64).

3. Tampon de frein (1) selon la revendication 1, **caractérisé en ce que** le bord du manchon coulissant (9) présente plusieurs bras de ressort (92) faisant saillie dans la rainure (64).

4. Tampon de frein (1) selon l'une quelconque des revendications 1 à 3, **caractérisé en ce que** la rainure (64) est conçue en tant que rainure filetée avec une profondeur variant en direction axiale.

5. Tampon de frein (1) selon l'une quelconque des revendications précédentes, **caractérisé en ce qu'une** bague d'arrêt (10) est logée dans la rainure (64).

6. Tampon de frein (1) selon la revendication 5, **caractérisé en ce que** la bague d'arrêt(10) est conçue en tant que joint torique ou en tant que bague de calage.

7. Tampon de frein (1) selon l'une quelconque des revendications précédentes, **caractérisé en ce que** l'ouverture de logement (72) de la pièce de pression (7) présente au moins un évidement (75, 76).

8. Tampon de frein (1) selon la revendication 7, **caractérisé en ce que** l'évidement (75, 76) est conçu en tant que rainure de logement.

9. Tampon de frein (1) selon la revendication 7, **caractérisé en ce que** l'évidement (75) est conçu en tant que chanfrein de transition entre l'ouverture de logement (72) et une surface d'appui (74) de la pièce de pression (7) tournée vers la surface avant (66) du tube fileté (61).

10. Tampon de frein (1) selon l'une quelconque des revendications précédentes, **caractérisé en ce que** plusieurs talons de retenue (93) faisant saillie dans une rainure de logement (76) dans l'ouverture de logement (72) de la pièce de pression (7) sont disposés, en particulier formés, sur une surface extérieure d'enveloppe (91) du manchon coulissant (9).

11. Tampon de frein (1) selon l'une quelconque des revendications précédentes, **caractérisé en ce que** le manchon coulissant (9) est conçu en tant que manchon à fente compressible radialement.

12. Tampon de frein (1) d'un frein à disque d'un véhicule utilitaire, présentant
- une broche de réglage (6) avec un tube fileté (61) et une tête de broche de réglage (62) faisant saillie d'une surface avant (66) du tube fileté (61),
- une pièce de pression (7) placée sur la tête de la broche de réglage (62), bloquée axialement par rapport à un axe longitudinal de la broche de réglage (6), avec une ouverture de logement (72) pour loger la tête de la broche de réglage (62),
- dans lequel un manchon coulissant (9) est disposé entre la pièce de pression (7) et la tête de broche de réglage (62),
- dans lequel la pièce de pression (7) est bloquée axialement dans une rainure (68) de la broche de réglage (6),
**caractérisé en ce que**
la pièce de pression (7) est bloquée axialement dans une rainure (68) sur la circonférence extérieure du tube fileté (61) près de la surface avant (66) du tube fileté (61) en chevauchant une zone non filetée (67) du tube fileté (61).

13. Tampon de frein (1) selon la revendication 12, **caractérisé en ce qu'au** moins des zones partielles de la zone (77) de la pièce de pression (7) chevauchant la zone non filetée (67) du tube fileté (61) sont maties dans la rainure (68).

14. Tampon de frein (1) selon l'une quelconque des revendications précédentes, **caractérisé en ce qu'un** épaulement d'outil (69) pour la mise en place d'un outil de service (12) est formé à une extrémité de la broche de réglage (6) proche de la tête de broche de réglage (62).

15. Frein à disque d'un véhicule utilitaire, présentant
- un étrier de frein (2) chevauchant un disque de frein (5),
- un appareil de serrage disposé dans l'étrier de frein (2) pour presser les garnitures de frein (3, 4) contre le disque de frein (5),
- au moins un tampon de frein (1) avec une broche de réglage (6) qui porte une pièce de pression (7) avec laquelle une garniture de frein (4) côté serrage peut être pressée contre le disque de frein (5),
- un appareil d'ajustage (8) en connexion active avec la broche de réglage (6) pour ajuster un jeu,
**caractérisé en ce que** le tampon de frein (1) est conçu selon l'une quelconque des revendications précédentes.
